# EUROPÄISCHE PATENTANMELDUNG

(11) **EP 4 733 808 A1**
(43) Veröffentlichungstag der Anmeldung: **29.04.2026**
(21) Anmeldenummer: 24208905.0
(22) Anmeldetag: 25.10.2024
(51) Int. Cl.: G01S 17/42, G01S 7/497, G01S 7/487, G01S 17/10

(54) **LIDAR-DISTANZMESSVORRICHTUNG**

(71) Anmelder: SICK AG, 79183 Waldkirch (DE)
(72) Erfinder: Schneider, Georg, 20535 Hamburg (DE)
(74) Vertreter: Manitz Finsterwald Patent- und Rechtsanwaltspartnerschaft mbB

(57) **Zusammenfassung**

Die Erfindung betrifft eine LIDAR-Distanzmessvorrichtung, umfassend: einen Laser, der ausgebildet ist, einen Sendelichtstrahl in unterschiedliche Abstrahlrichtungen in einen Messbereich zu entsenden; einen Lichtempfänger mit einer Vielzahl von Pixeln, der ausgebildet ist, von Objekten in dem Messbereich zurückgestrahltes Licht als Empfangslichtstrahl zu empfangen, wobei zumindest ein erster Pixel zum Empfangen des Empfangslichtstrahls derart angeordnet ist, dass Lichtstrahlen aus einer ersten Lichtstrahlerfassungsrichtung erfasst werden, und zumindest ein zweiter Pixel zur Erzeugung eines Rauschwerts derart angeordnet ist, dass Lichtstrahlen aus einer zweiten Lichtstrahlerfassungsrichtung erfasst werden; und eine Auswerteeinheit, die ausgebildet ist, eine Entfernung zu dem Objekt auf Basis einer Lichtlaufzeit zu ermitteln.

## Beschreibung

Die Erfindung bezieht sich auf eine LIDAR-Distanzmessvorrichtung sowie auf ein Verfahren zur Distanzmessung.

LIDAR-Systeme mit scannendem Laserstrahl (2D- oder 3D-Scanner) werden häufig verwendet, um präzise Entfernungsinformationen von Objekten in einer Umgebung zu erfassen. Um die Qualität der Signale zu beurteilen, wird üblicherweise die Signalstärke, typischerweise in Form der Intensität, gemessen. Zudem wird das Rauschlevel erfasst, um das Signal-zu-Rausch-Verhältnis (SNR) zu bestimmen, welches entscheidend für die Unterdrückung von Falsch-Positiven-Signalen ist.

In bestehenden Systemen, wie z.B. bei der Methode des Time-Correlated Single Photon Counting (TCSPC), erfolgt die Bestimmung des SNR typischerweise in zwei separaten Phasen. Zuerst wird das Distanzsignal erfasst, dann folgt eine zeitlich versetzte Rauschmessung ohne ausgesendetes Lasersignal. Diese Vorgehensweise hat jedoch den Nachteil, dass die Rauschmessung in einem anderen Winkelsegment als das ursprüngliche Signal erfolgt, da sich der scannende Laserstrahl in der Zwischenzeit weiterbewegt. Dies kann zu inkonsistenten Rauschwerten führen, insbesondere wenn sich das erfasste Sichtfeld innerhalb der Zeitverzögerung verändert. In der Praxis kann dies dazu führen, dass Signale fälschlicherweise als zu gut oder zu schlecht bewertet werden, was die Genauigkeit der Entfernungsbestimmung beeinträchtigt. Außerdem besteht die Gefahr, dass kleine Objekte übersehen werden, da das SNR aufgrund der falschen Rauschbewertung als unbedeutend eingestuft wird.

Es ist somit eine der Erfindung zugrunde liegende Aufgabe, eine verbesserte LIDAR-Distanzmessvorrichtung sowie ein entsprechendes Verfahren zur Messung einer Distanz bereitzustellen.

Diese Aufgabe wird durch die LIDAR-Distanzmessvorrichtung nach Anspruch 1 sowie durch ein Verfahren nach Anspruch 15 gelöst.

Ein erster Aspekt der Erfindung bezieht sich bevorzugt auf eine LIDAR-Distanzmessvorrichtung, umfassend:
Insbesondere einen Laser (oder allgemein eine Lichtquelle), der ausgebildet ist, einen Sendelichtstrahl in unterschiedliche Abstrahlrichtungen in einen Messbereich zu entsenden;
einen Lichtempfänger mit einer Vielzahl von Pixeln, der ausgebildet ist, von Objekten in dem Messbereich zurückgestrahltes, insbesondere remittiertes, Licht als Empfangslichtstrahl zu empfangen, wobei zumindest ein erster Pixel zum Empfangen des Empfangslichtstrahls derart angeordnet ist, dass Lichtstrahlen aus einer ersten Lichtstrahlerfassungsrichtung erfasst werden, und zumindest ein zweiter Pixel zur Erzeugung eines Rauschwerts derart angeordnet ist, dass Lichtstrahlen aus einer zweiten, insbesondere von der ersten Lichtstrahlrichtung unterschiedlichen, Lichtstrahlerfassungsrichtung erfasst werden; und
eine Auswerteeinheit, die ausgebildet ist, eine Entfernung zu dem Objekt auf Basis einer Lichtlaufzeit zu ermitteln.

Die Erfindung setzt auf der Idee auf, dass ein Signalwert für die Distanzmessung, im Folgenden nur Signalwert genannt, und ein Signalwert für die Rauschmessung, im Folgenden Rauschwert genannt, nicht mit dem gleichen Pixel erfolgt, sondern mit mindestens 2 unterschiedlichen Pixeln, welche in ihrer Grundanordnung Lichtstrahlen aus unterschiedlichen Lichtstrahlerfassungsrichtungen erfassen. Die LIDAR-Distanzmessvorrichtung ist insbesondere ausgebildet, die Abstrahlrichtung des Sendelichtstrahls während eines sogenannten Scanvorgangs kontinuierlich zu verändern, um beispielsweise ein vorgegebenes Winkelsegment zu scannen bzw. zu erfassen. Während eines Scanvorgangs der LIDAR-Distanzmessvorrichtung kann die Erzeugung des Signalwerts und des Rauschwerts zeitlich versetzt durchgeführt werden, sodass die erste Lichtstrahlerfassungsrichtung der zweiten Lichtstrahlerfassungsrichtung, zumindest während der Erzeugung des Signalwerts bzw. des Rauschwerts, entspricht. Mit anderen Worten erfassen der erste Pixel und der zweite Pixel während des jeweiligen Erfassungszeitraums, d.h. des Zeitraums, in dem das jeweilige Pixel aktiv ist bzw. angesteuert wird, um Lichtstrahlen zu erfassen, Lichtstrahlen aus derselben Lichtstrahlerfassungsrichtung bzw. denselben Lichtstrahlerfassungsrichtungen. Insbesondere kann sich die Lichtstrahlerfassungsrichtung eines jeweiligen Pixels während des Scanvorgangs verändern, sodass ein jeweiliger Pixel während seines Erfassungszeitraums Lichtstrahlen aus einem entsprechenden Winkelsegment erfasst. Die LIDAR-Distanzmessvorrichtung kann ausgebildet sein, den Erfassungszeitraum des ersten Pixels und des zweiten Pixels so einzustellen, dass das erste und zweite Pixel Lichtstrahlen aus demselben Winkelsegment erfassen. Hierzu kann der Erfassungszeitraum des ersten Pixels, insbesondere unmittelbar, vor oder nach dem Erfassungszeitraum des zweiten Pixels liegen. Die LIDAR-Distanzmessvorrichtung kann insbesondere ausschließlich zwei Pixel umfassen. Ferner kann der zweite Pixel insbesondere nur für die Erzeugung eines Rauschwerts verwendet werden.

Die Änderung der Abstrahlrichtung kann beispielsweise durch eine Rotation der LIDAR-Distanzmessvorrichtung, z.B. angetrieben durch einen Motor, oder durch einen, insbesondere rotierenden, Polygonspiegel als Umlenkelement erfolgen, der die Richtung des Sendelichtstrahls über die Zeit verändert. Ein Scanvorgang der LIDAR-Distanzmessvorrichtung umfasst üblicherweise, dass sich der Sendelichtstrahl während einer Distanzmessung weiterbewegt, d.h. in mehrere Richtungen abgestrahlt wird. Beispielsweise werden mehrere Lichtpulse nacheinander in unterschiedliche Raumrichtungen abgestrahlt. Die Lichtpulse können beispielsweise in einem horizontalen und/oder vertikalen Scanmuster ausgesendet werden. Die Erfindung ist somit insbesondere sowohl mit einer Scanlage als auch mit mehreren Scanlagen realisierbar.

Jedes der beiden Pixel weist insbesondere einen zugehörigen Sichtbereich auf, der sich voneinander unterscheidet, wobei sich die beiden Sichtbereiche insbesondere nicht oder nur teilweise überlappen. Der Sichtbereich ist insbesondere abhängig von der Pixelgröße sowie von der Empfangsoptik, welche beispielsweise dazu verwendet wird, das reflektierte oder gestreute Licht von einem Zielobjekt auf den Pixel zu fokussieren und zu bündeln. Die Empfangsoptik umfasst beispielweise zumindest eine Linse, zumindest einen Spiegel, eine Linsen-Spiegel-Kombination, einen optischen Filter und dergleichen. Die Empfangsoptik ist insbesondere ausgebildet, Lichtstrahlen aus der ersten Lichtstrahlerfassungsrichtung auf den ersten Pixel zu leiten und Lichtstrahlen aus der zweiten Lichtstrahlerfassungsrichtung auf den zweiten Pixel zu leiten. Die Anordnung eines jeweiligen Pixels in Bezug zur Empfangsoptik kann somit die Lichtstrahlerfassungsrichtung eines jeweiligen Pixels festlegen.

Die Auswerteeinheit kann insbesondere einen Time-to-Digital Converter (TDC) umfassen, der die Zeit misst, die das Licht benötigt, um vom Laser zur reflektierenden Oberfläche und zurück zum Lichtempfänger zu gelangen. Ferner kann die Auswerteeinheit ausgebildet sein, basierend auf einem Vergleich des Signalwerts mit dem Rauschwert eine Evaluierung des Signalwerts durchzuführen. Die Evaluierung umfasst beispielsweise eine Ermittlung eines Signal-Rausch-Verhältnisses, um Falsch-Positive-Signale zu identifizieren. Falsch-Positive-Signale treten auf, wenn die Distanzmessvorrichtung fälschlicherweise ein Objekt detektiert, das in Wirklichkeit nicht vorhanden ist. Dies kann durch Störungen wie Streulicht, Nebel, Staubpartikel oder andere Umweltfaktoren verursacht werden, die vom Sensor als gültiges Signal interpretiert werden. In einem solchen Fall wird ein Objekt gemessen, das nicht existiert, was zu inkorrekten Entfernungsmessungen führt.

Ein Vorteil der Erfindung besteht darin, dass keine aufwendigen algorithmischen Implementierungen notwendig sind, um ein stabiles Rauschniveau zu extrahieren, sodass Rechenkapazität eingespart und systematische negative Effekte reduziert werden. Ferner wird durch die Verwendung zweier unterschiedlicher Pixel zur Erzeugung des Signalwerts und des Rauschwerts bei einer zeitversetzen Distanz-und Rauschmessung eine Diskrepanz zwischen den Sichtfeldern vermieden, wodurch die Erzeugung von Falsch-Positiven-Signalen und Falsch-Negativen-Signalen reduziert wird, die zum Übersehen von kleinen Objekten führen können.

Weitere Ausführungsformen der Erfindung sind der Beschreibung, den Unteransprüchen und den Zeichnungen zu entnehmen.

Gemäß einer ersten Ausführungsform sind der erste Pixel und der zweite Pixel derart angeordnet, dass die erste Lichtstrahlerfassungsrichtung und die zweite Lichtstrahlerfassungsrichtung um einen vorgegebenen Winkel voneinander abweichen. Beispielsweise sind der erste Pixel und der zweite Pixel um einen vorgegebenen Abstand voneinander entfernt angeordnet, sodass Lichtstrahlen aus unterschiedlichen Richtungen, beispielsweise durch die Empfangsoptik, auf den jeweiligen Pixel geleitet werden. Der vorgegebene Winkel ist somit insbesondere von dem Abstand zwischen den beiden Pixeln abhängig. Die bedeutet auch, dass der Winkel zwischen der ersten Lichtstrahlerfassungsrichtung und der zweiten Lichtstrahlerfassungsrichtung durch den eingestellten Abstand zwischen dem ersten Pixel und dem zweiten Pixel festgelegt werden kann. Der vorgegebene Winkel kann insbesondere an die Änderungsgeschwindigkeit der Abstrahlrichtung, z.B. die Rotationsgeschwindigkeit der Distanzmessvorrichtung, angepasst sein.

Gemäß einer Ausführungsform ist die Distanzmessvorrichtung ausgebildet, die Abstrahlrichtung über die Zeit zu verändern, wobei der zweite Pixel in Bezug zum ersten Pixel derart angeordnet ist, dass die erste Lichtstrahlerfassungsrichtung zum Zeitpunkt t der zweiten Lichtstrahlerfassungsrichtung zum Zeitpunkt t + Δt entspricht oder die zweite Lichtstrahlerfassungsrichtung zum Zeitpunkt t der ersten Lichtstrahlerfassungsrichtung zum Zeitpunkt t + Δt entspricht. Die Zeitdauer Δt ist dabei insbesondere abhängig von der Änderungsgeschwindigkeit der Abstrahlrichtung und von der Anordnung des ersten und zweiten Pixels. Dementsprechend können die Änderungsgeschwindigkeit der Abstrahlrichtung und die Anordnung des ersten und zweiten Pixels derart eingestellt werden, dass sich ein gewünschter Wert Δt einstellt. Durch geeignete Wahl des Abstands zwischen dem ersten und zweiten Pixel lässt sich beispielsweise der vorgegebene Winkel so einstellen, dass er exakt dem durch die Änderung der Abstrahlrichtung verursachten Winkelunterschied zwischen Rauschmessung und Distanzmessung nach einer Zeitdauer Δt entspricht.

Der jeweilige Erfassungszeitraum des ersten und zweiten Pixels kann somit derart eingestellt werden, dass das erste und zweite Pixel Lichtstrahlen aus demselben Winkelsegment, insbesondere zeitlich versetzt, erfassen. Hierzu kann der Erfassungszeitraum des ersten Pixels, insbesondere unmittelbar, vor oder nach dem Erfassungszeitraum des zweiten Pixels liegen. Mit anderen Worten erfolgt die Erzeugung des Rauschwerts, insbesondere unmittelbar, vor oder nach der Erzeugung des Signalwerts.

Gemäß einer Ausführungsform sind ein Erfassungszeitraum des ersten Pixels und ein Erfassungszeitraum des zweiten Pixels im Wesentlichen gleich groß. Hierdurch kann sichergestellt werden, dass die Erzeugung des Signalwerts und des Rauschwerts basierend auf demselben erfassten Winkelbereich, d.h. basierend auf Lichtstrahlen aus derselben Richtung, erfolgen und somit bestmöglich kompatibel sind. Dies ist insbesondere der Fall, wenn die Pixel dieselbe Dimensionierung, z.B. die gleiche Anzahl von Photodioden, aufweisen und somit das erfasste Winkelsegment, insbesondere ausschließlich, von dem Erfassungszeitraum eines jeweiligen Pixels abhängt.

Gemäß einer Ausführungsform ist der Erfassungszeitraum des ersten Pixels und der Erfassungszeitraum des zweiten Pixel an einen Sichtbereich des jeweiligen Pixels derart angepasst, dass ein durch den ersten Pixel erfasstes Winkelsegment und ein durch den zweiten Pixel erfasstes Winkelsegment nahezu identisch sind. Es kann beispielsweise aufgrund von zeitlichen Anforderungen oder anderen technischen Gründen nötig sein, z.B. die Rauschwerterzeugung zeitlich kürzer bzw. länger durchzuführen. In diesem Fall wäre das erfasste Winkelsegment kleiner bzw. größer, was zu Abweichungen von dem tatsächlichen Rauschwert führen kann. Dies kann kompensiert werden, indem der Sichtbereich des zweiten Pixels, welches für die Erzeugung des Rauschwerts ausgebildet ist, größer bzw. kleiner eingestellt wird. Die Anpassung des Sichtbereichs kann analog auch für den ersten Pixel erfolgen. Anders ausgedrückt, wird sichergestellt, dass das erfasste Winkelsegment, welches von einer statischen Größe, nämlich der Pixelgröße, und von einer dynamischen Größe, nämlich dem Erfassungszeitraum bzw. der Messzeit des jeweiligen Pixels, abhängt, für die Erzeugung des Signalwerts durch den ersten Pixel und für die Erzeugung des Rauschwerts durch den zweiten Pixel im Wesentlichen identisch sind.

Gemäß einer Ausführungsform ist der erste Pixel ausgebildet, einen Signalwert zu erzeugen und der zweite Pixel ausgebildet, insbesondere gleichzeitig mit dem Signalwert, einen Rauschwert zu erzeugen, wobei die Auswerteeinheit ferner ausgebildet ist, basierend auf dem Signalwert und dem Rauschwert ein Signal-Rausch-Verhältnis zu ermitteln und basierend auf dem Signal-Rausch-Verhältnis eine fehlerhafte Entfernungsmessung zu ermitteln. Wenn das Signal-Rausch-Verhältnis beispielsweise kleiner als ein vorgegebener Schwellenwert ist, kann die Auswerteinheit feststellen, dass es sich um ein Falsch-Positives-Signal handelt und den zugehörigen Signalwert für die Distanzermittlung verwerfen. Vorteilhafterweise wird der erzeugte Rauschwert auf Basis desselben erfassten Winkelsegments wie der Signalwert erzeugt, wodurch verhindert wird, dass das Signal-Rausch-Verhältnis auf der Grundlage unterschiedlicher Erfassungsbereiche ermittelt wird. Folglich kann die Wahrscheinlichkeit für Falsche-Negative-Signale und Falsche-Positive-Signale reduziert und damit eine zuverlässigere Distanzmessung erzielt werden.

Gemäß einer Ausführungsform rotiert der Lichtempfänger und/oder eine Empfangsoptik des Lichtempfängers in Übereinstimmung mit der Änderung der Ablenkungsrichtung des Sendelichtstrahls. Hierdurch kann beispielsweise sichergestellt werden, dass der zweite Pixel stets ein im Vergleich zum ersten Pixel um einen vorgegebenen Winkel versetzten Erfassungsbereich bzw. versetztes Winkelsegment erfasst. Dies kann insbesondere dann nützlich sein, wenn ein Polygonspiegel als Ablenkelement eingesetzt wird. Die Rotation des Lichtempfängers und/oder der Empfangsoptik kann in vollständiger Übereinstimmung mit der Änderung der Ablenkrichtung des Sendelichtstrahls erfolgen oder leicht zeitversetzt. Vorzugsweise entspricht die Änderungsgeschwindigkeit der Ablenkrichtung der Rotationsgeschwindigkeit des Lichtempfängers und/oder der Empfangsoptik.

Bevorzugt gelangt zumindest im Wesentlichen kein Licht des Empfangslichtstrahls auf den zweiten Pixel, sondern wird, bevorzugt nur, von dem ersten Pixel empfangen. Dies gilt insbesondere für die Zeitpunkte oder Zeitdauer, in welcher der zweite Pixel den Rauschwert erzeugt. Die Empfangsoptik und die Anordnung der Pixel kann dafür entsprechend ausgebildet sein.

Gemäß einer Ausführungsform umfasst die Distanzmessvorrichtung einen dritten Pixel zur Erzeugung eines weiteren Rauschwerts, welcher derart angeordnet ist, dass Lichtstrahlen aus einer dritten Lichtstrahlerfassungsrichtung erfasst werden. Somit kann ein weiterer Rauschwert, insbesondere unabhängig von dem Rauschwert des zweiten Pixels, erzeugt werden, welcher für die Ermittlung des tatsächlichen Rauschwerts verwendet werden kann. Hierdurch kann die Zuverlässigkeit der Rauschmessung verbessert werden.

Gemäß einer Ausführungsform liegt die erste Lichtstrahlerfassungsrichtung zwischen der zweiten Lichtstrahlerfassungsrichtung und der dritten Lichtstrahlerfassungsrichtung, insbesondere wobei die zweite Lichtstrahlerfassungsrichtung und die dritte Lichtstrahlerfassungsrichtung von der ersten Lichtstrahlerfassungsrichtung um einen vorgegebenen, insbesondere den gleichen, Winkel abweichen. Während eines Scanvorgangs der LIDAR-Distanzmessvorrichtung, bei dem die Abstrahlrichtung des Sendelichtstrahls kontinuierlich verändert wird, kann somit in einer ersten Phase durch den zweiten Pixel oder durch den dritten Pixel ein erster Rauschwert erzeugt werden. In einer darauffolgenden zweiten Phase kann durch den ersten Pixel der Signalwert erzeugt werden, wohingegen in einer anschließenden dritten Phase durch den dritten Pixel oder den zweiten Pixel ein zweiter Rauschwert erzeugt werden kann. Die durch den ersten, zweiten und dritten Pixel erzeugten Signalwerte bzw. Rauschwerte werden insbesondere auf Basis von erfassten Lichtstrahlen aus demselben Winkelsegment, d.h. auf Basis desselben Erfassungsbereichs, erzeugt. Anders ausgedrückt sind der zweite und dritte Pixel in Bezug zum ersten Pixel derart angeordnet, dass - während eins Scanvorgangs - die dritte Lichtstrahlerfassungsrichtung zum Zeitpunkt t der ersten Lichtstrahlerfassungsrichtung zum Zeitpunkt t + Δt entspricht und die erste Lichtstrahlerfassungsrichtung zum Zeitpunkt t der zweiten Lichtstrahlerfassungsrichtung zum Zeitpunkt t + Δt entspricht oder die erste Lichtstrahlerfassungsrichtung zum Zeitpunkt t der dritten Lichtstrahlerfassungsrichtung zum Zeitpunkt t + Δt entspricht und die zweite Lichtstrahlerfassungsrichtung zum Zeitpunkt t der ersten Lichtstrahlerfassungsrichtung zum Zeitpunkt t + Δt entspricht. Der dritte Pixel blickt somit aus Sicht der Rotationsrichtung räumlich mit Bezug auf den ersten Pixel "vor" bzw. "zurück", während der zweite Pixel aus Sicht der Rotationsrichtung mit Bezug auf den ersten Pixel räumlich "zurück"- bzw. "vorblickt".

Gemäß einer Ausführungsform ist die Auswerteeinheit ausgebildet, einen durchschnittlichen Rauschwert basierend auf dem Rauschwert und dem weiteren Rauschwert zu ermitteln und basierend auf dem Signalwert und dem durchschnittlichen Rauschwert das Signal-Rausch-Verhältnis zu ermitteln. Die Bestimmung des Mittelwerts der Rauschwerte verbessert insbesondere die Genauigkeit der Rauschmessung, da potenzielle Fehler bei der Erzeugung des Rauschwerts durch den weiteren Rauschwert kompensiert werden können. Ein weiterer Vorteil liegt darin, dass zeitliche Variationen, die durch Bewegung innerhalb der Szene entstehen, z.B. durch ein sich bewegendes Objekt, ausgeglichen werden können.

Gemäß einer Ausführungsform umfasst ein jeweiliger Pixel zumindest eine SPAD (Single-Photon Avalanche Diode), vorzugsweise mehrere SPADs. Der jeweilige Pixel kann beispielsweise ein SPAD-Array umfassen. Mehrere SPADs arbeiten beispielsweise gemeinsam als eine Einheit, um die Empfindlichkeit des jeweiligen Pixels zu erhöhen und die Wahrscheinlichkeit zu verbessern, einzelne Photonen zu detektieren. Dies wird auch als "Binning" bezeichnet, bei dem die Signale von mehreren SPADs zu einem einzigen Pixel zusammengefasst werden. Alternativ kann ein jeweiliger Pixel auch zumindest eine und vorzugsweise mehrere Avalanche Photodioden umfassen.

Gemäß einer Ausführungsform sind der erste Pixel und der zweite Pixel als eigenständige Bauteile ausgebildet. Hierdurch können die Pixel unabhängig voneinander einen Signalwert bzw. einen Rauschwert erzeugen, sodass die Bestimmung des Signal-Rausch-Verhältnisses robuster wird. Beispielsweise erfolgt die Signalweiterleitung und die Signalverarbeitung der durch die beiden Pixel erzeugten Signale unabhängig voneinander. Die beiden Pixel sind insbesondere physisch voneinander getrennt, z.B. sind beide Pixel als eigenständige Chips ausgebildet. Der Abstand zwischen den beiden Pixeln ist insbesondere konstant.

Gemäß einer Ausführungsform umfasst der Lichtempfänger eine Vielzahl von SPADs, wobei eine Steuereinheit ausgebildet ist, eine erste Anzahl von SPADs anzusteuern, um den ersten Pixel zu bilden, und eine zweite Anzahl von SPADs anzusteuern, um den zweiten Pixel zu bilden. Der erste Pixel und der zweite Pixel sind dabei insbesondere jeweils als ein einzelner Chip ausgebildet. Vorteilhafterweise lässt sich somit softwareseitig der Abstand zwischen den Pixeln variieren, z.B. durch geeignete Auswahl bzw. Ansteuerung der SPADs pro Pixel. Je nach Bedarf und Anwendung kann somit die Pixelgröße flexibel angepasst werden. Ein jeweiliger Pixel kann ein symmetrisches oder auch ein asymmetrisches Raster von SPADs umfassen, beispielsweise kann ein jeweiliger Pixel 2x2 SPADs, 4x4 SPADs, 8x8 SPADs oder vorzugsweise 5x5 SPADs (symmetrisch) oder 4x2 SPADs, 6x3 SPADs oder 6x4 SPADs (asymmetrisch) umfassen.

Gemäß einer Ausführungsform ist der erste Pixel zusätzlich zur Erzeugung eines Referenzrauschwerts ausgebildet. Beispielsweise kann der Signalwert als auch der Referenzrauschwert aus dem durch den ersten Pixel erzeugten Signal ermittelt werden. Ferner kann der Referenzrauschwert des ersten Pixels mit dem durch den zweiten Pixel erzeugten Rauschwert verglichen werden, um den Rauschwert des zweiten Pixels zu evaluieren.

Der Signalwert und/oder der Rauschwert können beispielsweise basierend auf einem Histogramm der durch das jeweilige Pixel empfangenen Photonen ermittelt werden. Das Histogramm erfasst insbesondere die Ankunftszeit von Photonen in verschiedenen Zeitintervallen (Bins), wobei die Position eines Peaks, insbesondere in dem Histogramm, welches basierend auf den durch das erste Pixel empfangenen Photonen erstellt wird, die Distanz zu einem Objekt widerspiegeln kann. Der Referenzrauschwert wird vorzugsweise durch die Analyse der Bins ohne Peaks bestimmt. Hierzu können Algorithmen verwendet werden, die die Signalpeaks erkennen und aus der Berechnung des Mittelwerts herausfiltern. Bei der Ermittlung des Rauschwerts kann ein solches Herausfiltern des Peaks hingegen überflüssig sein, da das zweite Pixel in der Regel den Empfangslichtstrahl nicht empfängt und verarbeitet, sodass hier kein Peak vorliegt.

Ein weiterer Aspekt der Erfindung betrifft ein Verfahren zur Ermittlung einer Distanz, welches umfasst, dass:
ein Sendelichtstrahl in unterschiedliche Abstrahlrichtungen in einen Messbereich entsendet wird;
von einem Lichtempfänger mit einer Vielzahl von Pixeln von Objekten in dem Messbereich zurückgestrahltes Licht als Empfangslichtstrahl empfangen wird, von zumindest einem ersten Pixel der Empfangslichtstrahl aus einer Lichtstrahlerfassungsrichtung empfangen wird und vor oder nach einer Zeitdauer Δt von zumindest einem zweiten Pixel Lichtstrahlen aus derselben Lichtstrahlerfassungsrichtung erfasst werden, um einen Rauschwert zu erzeugen; und eine Auswerteeinheit, die ausgebildet ist, eine Entfernung zu dem Objekt auf Basis einer Lichtlaufzeit zu ermitteln.

Für das Verfahren gelten die Ausführungen zu der erfindungsgemäßen LIDAR-Distanzmessvorrichtung entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: eine schematische Darstellung einer LIDAR-Distanzmessvorrichtung;
- Fig. 2: eine schematische Darstellung eines Lichtempfängers der LIDAR-Distanzmessvorrichtung;
- Fig. 3a und 3b: eine schematische Darstellung zweier Phasen eines Scanvorgangs der LIDAR-Distanzmessvorrichtung.

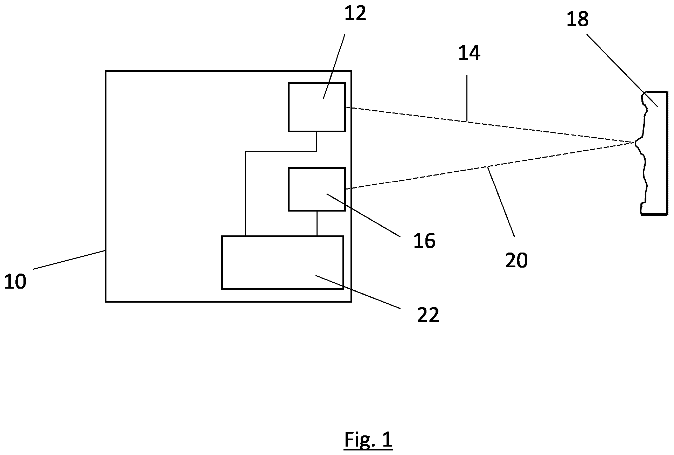

Fig. 1 zeigt eine schematische Darstellung einer LIDAR-Distanzmessvorrichtung 10.

Die LIDAR-Distanzmessvorrichtung 10, umfasst einen Laser 12, der ausgebildet ist, einen Sendelichtstrahl 14 in unterschiedliche Abstrahlrichtungen in einen Messbereich zu entsenden; einen Lichtempfänger 16 mit einer Vielzahl von nicht gezeigten Pixeln, der ausgebildet ist, von Objekten 18 in dem Messbereich zurückgestrahltes Licht als Empfangslichtstrahl 20 zu empfangen, wobei zumindest ein erster Pixel zum Empfangen des Empfangslichtstrahls derart angeordnet ist, dass Lichtstrahlen aus einer ersten Lichtstrahlerfassungsrichtung erfasst werden, und zumindest ein zweiter Pixel zur Erzeugung eines Rauschwerts derart angeordnet ist, dass Lichtstrahlen aus einer zweiten Lichtstrahlerfassungsrichtung erfasst werden; und eine Auswerteeinheit 22, die ausgebildet ist, eine Entfernung zu dem Objekt 18 auf Basis einer Lichtlaufzeit zu ermitteln.

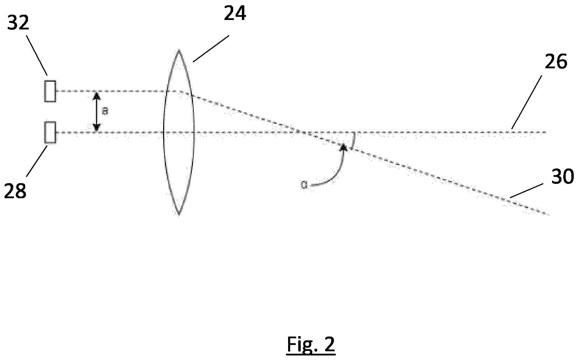

Fig. 2 zeigt eine schematische Darstellung eines Lichtempfängers 16 der LIDAR-Distanzmessvorrichtung 10. Der Lichtempfänger umfasst eine Empfangsoptik in Form einer Linse 24, welche Lichtstrahlen aus einer ersten Lichtstrahlerfassungsrichtung 26 bündelt und auf einen ersten Pixel 28 leitet, welcher ausgebildet ist, den Empfangslichtstrahl 20 zu empfangen und einen Signalwert zu erzeugen, auf dessen Basis eine Distanzmessung durchgeführt werden kann. Die Linse 24 bündelt ferner Lichtstrahlen aus einer zweiten Lichtstrahlerfassungsrichtung 30 und leitet diese auf einen zweiten Pixel 32, welcher ausgebildet ist, einen Rauschwert zu erzeugen. Der erste Pixel 28 ist dabei entlang einer Mittelachse der Linse 24 angeordnet, während der zweite Pixel 32 in einem Abstand a zum ersten Pixel 28 angeordnet ist. Die Anordnung des ersten Pixels 28 in Bezug zum zweiten Pixel 32 beeinflusst dabei den Winkel α zwischen der ersten

Lichtstrahlerfassungsrichtung 26 und der zweiten Lichtstrahlerfassungsrichtung 32, wie in Fig. 2 ersichtlich ist. Rotiert nun die LIDAR-Distanzmessvorrichtung 10, um den Sendelichtstrahl 14 in verschiedene Abstrahlrichtungen zu senden, ist erkennbar, dass die zweite Lichtstrahlerfassungsrichtung 32 nach einem Zeitraum Δt, nachdem die LIDAR-Distanzmessvorrichtung 10 um den Winkel α rotiert ist, der ersten Lichtstrahlerfassungsrichtung 26 entspricht oder umgekehrt, je nach dem in welche Richtung die LIDAR-Distanzmessvorrichtung 10 rotiert. Folglich ist es möglich, zeitversetzt eine Erfassung des Signalwerts für die Distanzmessung durch den ersten Pixel 28 und eine Erfassung des Rauschwerts für die Rauschmessung durch den zweiten Pixel 32 durchzuführen, welche auf dem gleichen erfassten Winkelsegment 34 basieren. Die Auswerteeinheit 22 führt anschließend eine Evaluierung des Signalwerts basierend auf einem Vergleich des Signalwerts mit dem Rauschwert durch. Basierend auf dem Signalwert und dem Rauschwert wird ein Signal-Rausch-Verhältnis ermittelt und basierend auf dem Signal-Rausch-Verhältnis eine fehlerhafte Entfernungsmessung festgestellt. Wenn das Signal-Rausch-Verhältnis beispielsweise kleiner als ein vorgegebener Schwellenwert ist, die Auswerteinheit 22 den zugehörigen Signalwert als Falsch-Positives-Signals und zieht den entsprechenden Signalwert nicht für die Distanzermittlung heran.

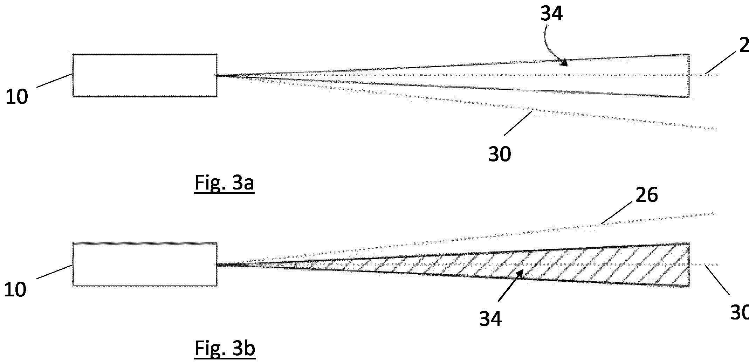

Fig. 3a und 3b zeigen zwei Phasen eines Scanvorgangs der LIDAR-Distanzmessvorrichtung 10.

In der in Fig. 3a dargestellten ersten Phase des Scanvorgangs der LIDAR-Distanzmessvorrichtung 10 werden für einen ersten Erfassungszeitraum Lichtpulse innerhalb eines Winkelsegments 34 ausgesendet, deren Reflektionen von dem ersten Pixel 28 erfasst werden, um einen entsprechenden Signalwert zu erzeugen, welcher gemäß dem TOF-Verfahren zur Ermittlung der Distanz verwendet wird. Der erste Pixel 28 erfasst dabei Lichtstrahlen aus der ersten Lichtstrahlerfassungsrichtung 26, welche sich gemäß der Abstrahlrichtung des Sendelichtstrahls 14 über die Zeit verändert, sodass innerhalb der ersten Phase ein Winkelsegment 34 abgetastet bzw. erfasst wird. In der ersten Phase erfasst der zweite Pixel 32 Lichtstrahlen aus einer zweiten Lichtstrahlerfassungsrichtung 30, welche, wie in Fig. 3a erkennbar, um einen vorgegebenen Winkel α von der ersten Lichtstrahlerfassungsrichtung 26 abweicht. Mit anderen Worten blickt der zweite Pixel 32 räumlich "zurück" aus Sicht der Rotationsrichtung des Sendelichtstrahls 14.

In einer in Fig. 3b dargestellten zweiten Phase des Scanvorgangs, in der die Abstrahlrichtung des Sendelichtstrahls 14 rotiert ist, erfasst der zweite Pixel 32 Lichtstrahlen aus dem in der ersten Phase durch den ersten Pixel 28 erfassten Winkelsegment 34 und erzeugt einen Rauschwert, der für die Rauschmessung verwendet wird. Der durch den ersten Pixel 28 in der ersten Phase erzeugte Signalwert und der durch den zweiten Pixel 32 in der zweiten Phase erzeugte Rauschwert basieren damit auf demselben erfassten Winkelsegment 34, sodass Fehler bei der Ermittlung des Signal-Rausch-Verhältnisses aufgrund von unterschiedlichen Erfassungsbereichen minimiert werden.

### Bezugszeichenliste

- 10: LIDAR-Distanzmessvorrichtung
- 12: Laser
- 14: Sendelichtstrahl
- 16: Lichtempfänger
- 18: Objekt
- 20: Empfangslichtstrahl
- 22: Auswerteeinheit
- 24: Linse
- 26: erste Lichtstrahlerfassungsrichtung
- 28: erster Pixel
- 30: zweite Lichtstrahlerfassungsrichtung
- 32: zweiter Pixel
- 34: Winkelsegment

## Patentansprüche

1. LIDAR-Distanzmessvorrichtung (10), umfassend:
einen Laser (12), der ausgebildet ist, einen Sendelichtstrahl (14) in unterschiedliche Abstrahlrichtungen in einen Messbereich zu entsenden;
einen Lichtempfänger (16) mit einer Vielzahl von Pixeln (28, 32), der ausgebildet ist, von Objekten (18) in dem Messbereich zurückgestrahltes Licht als Empfangslichtstrahl (20) zu empfangen, wobei zumindest ein erster Pixel (28) zum Empfangen des Empfangslichtstrahls (20) derart angeordnet ist, dass Lichtstrahlen aus einer ersten Lichtstrahlerfassungsrichtung (26) erfasst werden, und zumindest ein zweiter Pixel (32) zur Erzeugung eines Rauschwerts derart angeordnet ist, dass Lichtstrahlen aus einer zweiten Lichtstrahlerfassungsrichtung (30) erfasst werden; und
eine Auswerteeinheit (22), die ausgebildet ist, eine Entfernung zu dem Objekt (18) auf Basis einer Lichtlaufzeit zu ermitteln.

2. LIDAR-Distanzmessvorrichtung (10) nach Anspruch 1,
wobei der erste Pixel (28) und der zweite Pixel (32) derart angeordnet sind, dass die erste Lichtstrahlerfassungsrichtung (26) und die zweite Lichtstrahlerfassungsrichtung (30) um einen vorgegebenen Winkel voneinander abweichen.

3. LIDAR-Distanzmessvorrichtung (10) nach Anspruch 1 oder 2,
wobei die LIDAR-Distanzmessvorrichtung (10) ausgebildet ist, die Abstrahlrichtung über die Zeit zu verändern,
wobei der zweite Pixel (32) in Bezug zum ersten Pixel (28) derart angeordnet ist,
dass die erste Lichtstrahlerfassungsrichtung (26) zum Zeitpunkt t der zweiten Lichtstrahlerfassungsrichtung (30) zum Zeitpunkt t + Δt entspricht oder die zweite Lichtstrahlerfassungsrichtung (30) zum Zeitpunkt t der ersten Lichtstrahlerfassungsrichtung (26) zum Zeitpunkt t + Δt entspricht.

4. LIDAR-Distanzmessvorrichtung (10) nach einem der vorstehenden Ansprüche,
wobei ein Erfassungszeitraum des ersten Pixels (28) und ein Erfassungszeitraum des zweiten Pixels (32) im Wesentlichen gleich groß sind.

5. LIDAR-Distanzmessvorrichtung (10) nach Anspruch 4,
wobei der Erfassungszeitraum des ersten Pixels (28) und der Erfassungszeitraum des zweiten Pixel (32) an den Sichtbereich des jeweiligen Pixels (28, 32) derart angepasst ist, dass das durch den ersten Pixel (28) erfasste Winkelsegment (34) und das durch den zweiten Pixel (32) erfasste Winkelsegment (34) nahezu identisch ist.

6. LIDAR-Distanzmessvorrichtung (10) nach einem der vorstehenden Ansprüche,
wobei der erste Pixel (28) ausgebildet ist, einen Signalwert zu erzeugen und der zweite Pixel (32) ausgebildet ist, einen Rauschwert zu erzeugen, wobei die Auswerteeinheit (22) ferner ausgebildet ist, basierend auf dem Signalwert und dem Rauschwert ein Signal-Rausch-Verhältnis zu ermitteln und basierend auf dem Signal-Rausch-Verhältnis eine fehlerhafte Entfernungsmessung zu ermitteln.

7. LIDAR-Distanzmessvorrichtung (10) nach einem der vorstehenden Ansprüche,
wobei der Lichtempfänger (16) und/oder eine Empfangsoptik des Lichtempfängers (16) in Übereinstimmung mit der Änderung der Ablenkungsrichtung rotiert.

8. LIDAR-Distanzmessvorrichtung (10) nach einem der vorstehenden Ansprüche,
wobei die LIDAR-Distanzmessvorrichtung (10) ein dritter Pixel zur Erzeugung eines weiteren Rauschwerts umfasst, welches derart angeordnet ist, dass Lichtstrahlen aus einer dritten Lichtstrahlerfassungsrichtung erfasst werden.

9. LIDAR-Distanzmessvorrichtung (10) nach Anspruch 8,
wobei die erste Lichtstrahlerfassungsrichtung (26) zwischen der zweiten Lichtstrahlerfassungsrichtung (30) und der dritten Lichtstrahlerfassungsrichtung liegt,
insbesondere wobei die zweite Lichtstrahlerfassungsrichtung (30) und die dritte Lichtstrahlerfassungsrichtung von der ersten Lichtstrahlerfassungsrichtung (26) um einen vorgegebenen, insbesondere den gleichen, Winkel abweichen.

10. LIDAR-Distanzmessvorrichtung (10) nach Anspruch 8 oder 9,
wobei die Auswerteeinheit (22) ausgebildet ist, einen durchschnittlichen Rauschwert basierend auf dem Rauschwert und dem weiteren Rauschwert zu ermitteln und
basierend auf dem Signalwert und dem durchschnittlichen Rauschwert das Signal-Rausch-Verhältnis zu ermitteln.

11. LIDAR-Distanzmessvorrichtung (10) nach einem der vorstehenden Ansprüche,
wobei ein jeweiliger Pixel (28, 32) zumindest eine Single-Photon Avalanche Diode (SPAD), vorzugsweise mehrere SPADs, umfasst.

12. LIDAR-Distanzmessvorrichtung (10) nach einem der vorstehenden Ansprüche,
wobei der erste Pixel (28) und der zweite Pixel (32) als eigenständige Bauteile ausgebildet sind.

13. LIDAR-Distanzmessvorrichtung (10) nach einem der vorstehenden Ansprüche,
wobei der Lichtempfänger (16) eine Vielzahl von SPADs umfasst,
wobei eine Steuereinheit ausgebildet ist, eine erste Anzahl von SPADs anzusteuern, um den ersten Pixel (28) zu bilden, und eine zweite Anzahl von SPADs anzusteuern, um den zweiten Pixel (32) zu bilden.

14. LIDAR-Distanzmessvorrichtung (10) nach einem der vorstehenden Ansprüche,
wobei der erste Pixel (28) zusätzlich zur Erzeugung eines Referenzrauschwerts ausgebildet ist.

15. Verfahren zur Ermittlung einer Distanz, welches umfasst, dass:
ein Sendelichtstrahl (14) in unterschiedliche Abstrahlrichtungen in einen Messbereich entsendet wird;
von einem Lichtempfänger (16) mit einer Vielzahl von Pixeln (28, 32) von Objekten (18) in dem Messbereich zurückgestrahltes Licht als Empfangslichtstrahl (20) empfangen wird, von zumindest einem ersten Pixel (28) der Empfangslichtstrahl (20) aus einer Lichtstrahlerfassungsrichtung empfangen wird und vor oder nach einer Zeitdauer Δt von zumindest einem zweiten Pixel (32) Lichtstrahlen aus derselben Lichtstrahlerfassungsrichtung erfasst werden, um einen Rauschwert zu erzeugen; und
eine Auswerteeinheit (22), die ausgebildet ist, eine Entfernung zu dem Objekt (18) auf Basis einer Lichtlaufzeit zu ermitteln.

## Geänderte Patentansprüche

### Geänderte Patentansprüche gemäss Regel 137(2) EPÜ.

1. LIDAR-Distanzmessvorrichtung (10), umfassend:
einen Laser (12), der ausgebildet ist, einen Sendelichtstrahl (14) in unterschiedliche Abstrahlrichtungen in einen Messbereich zu entsenden;
einen Lichtempfänger (16) mit einer Vielzahl von Pixeln (28, 32), der ausgebildet ist, von Objekten (18) in dem Messbereich zurückgestrahltes Licht als Empfangslichtstrahl (20) zu empfangen, wobei zumindest ein erster Pixel (28) zum Empfangen des Empfangslichtstrahls (20) und zur Erzeugung eines Signalwerts derart angeordnet ist, dass Lichtstrahlen aus einer ersten Lichtstrahlerfassungsrichtung (26) erfasst werden, und zumindest ein zweiter Pixel (32) zur Erzeugung eines Rauschwerts derart angeordnet ist, dass Lichtstrahlen aus einer zweiten Lichtstrahlerfassungsrichtung (30) erfasst werden; und
eine Auswerteeinheit (22), die ausgebildet ist, eine Entfernung zu dem Objekt (18) auf Basis einer Lichtlaufzeit zu ermitteln und basierend auf einem Vergleich des Signalwerts mit dem Rauschwert eine Evaluierung des Signalwerts durchzuführen.

2. LIDAR-Distanzmessvorrichtung (10) nach Anspruch 1,
wobei der erste Pixel (28) und der zweite Pixel (32) derart angeordnet sind, dass die erste Lichtstrahlerfassungsrichtung (26) und die zweite Lichtstrahlerfassungsrichtung (30) um einen vorgegebenen Winkel voneinander abweichen.

3. LIDAR-Distanzmessvorrichtung (10) nach Anspruch 1 oder 2,
wobei die LIDAR-Distanzmessvorrichtung (10) ausgebildet ist, die Abstrahlrichtung über die Zeit zu verändern,
wobei der zweite Pixel (32) in Bezug zum ersten Pixel (28) derart angeordnet ist,
dass die erste Lichtstrahlerfassungsrichtung (26) zum Zeitpunkt t der zweiten Lichtstrahlerfassungsrichtung (30) zum Zeitpunkt t + Δt entspricht oder die zweite Lichtstrahlerfassungsrichtung (30) zum Zeitpunkt t der ersten Lichtstrahlerfassungsrichtung (26) zum Zeitpunkt t + Δt entspricht.

4. LIDAR-Distanzmessvorrichtung (10) nach einem der vorstehenden Ansprüche,
wobei ein Erfassungszeitraum des ersten Pixels (28) und ein Erfassungszeitraum des zweiten Pixels (32) im Wesentlichen gleich groß sind.

5. LIDAR-Distanzmessvorrichtung (10) nach Anspruch 4,
wobei der Erfassungszeitraum des ersten Pixels (28) und der Erfassungszeitraum des zweiten Pixel (32) an den Sichtbereich des jeweiligen Pixels (28, 32) derart angepasst ist, dass das durch den ersten Pixel (28) erfasste Winkelsegment (34) und das durch den zweiten Pixel (32) erfasste Winkelsegment (34) nahezu identisch ist.

6. LIDAR-Distanzmessvorrichtung (10) nach einem der vorstehenden Ansprüche,
wobei der erste Pixel (28) ausgebildet ist, einen Signalwert zu erzeugen und der zweite Pixel (32) ausgebildet ist, einen Rauschwert zu erzeugen, wobei die Auswerteeinheit (22) ferner ausgebildet ist, basierend auf dem Signalwert und dem Rauschwert ein Signal-Rausch-Verhältnis zu ermitteln und basierend auf dem Signal-Rausch-Verhältnis eine fehlerhafte Entfernungsmessung zu ermitteln.

7. LIDAR-Distanzmessvorrichtung (10) nach einem der vorstehenden Ansprüche,
wobei der Lichtempfänger (16) und/oder eine Empfangsoptik des Lichtempfängers (16) in Übereinstimmung mit der Änderung der Ablenkungsrichtung rotiert.

8. LIDAR-Distanzmessvorrichtung (10) nach einem der vorstehenden Ansprüche,
wobei die LIDAR-Distanzmessvorrichtung (10) ein dritter Pixel zur Erzeugung eines weiteren Rauschwerts umfasst, welches derart angeordnet ist, dass Lichtstrahlen aus einer dritten Lichtstrahlerfassungsrichtung erfasst werden.

9. LIDAR-Distanzmessvorrichtung (10) nach Anspruch 8,
wobei die erste Lichtstrahlerfassungsrichtung (26) zwischen der zweiten Lichtstrahlerfassungsrichtung (30) und der dritten Lichtstrahlerfassungsrichtung liegt,
insbesondere wobei die zweite Lichtstrahlerfassungsrichtung (30) und die dritte Lichtstrahlerfassungsrichtung von der ersten Lichtstrahlerfassungsrichtung (26) um einen vorgegebenen, insbesondere den gleichen, Winkel abweichen.

10. LIDAR-Distanzmessvorrichtung (10) nach Anspruch 8 oder 9,
wobei die Auswerteeinheit (22) ausgebildet ist, einen durchschnittlichen Rauschwert basierend auf dem Rauschwert und dem weiteren Rauschwert zu ermitteln und
basierend auf dem Signalwert und dem durchschnittlichen Rauschwert das Signal-Rausch-Verhältnis zu ermitteln.

11. LIDAR-Distanzmessvorrichtung (10) nach einem der vorstehenden Ansprüche,
wobei ein jeweiliger Pixel (28, 32) zumindest eine Single-Photon Avalanche Diode (SPAD), vorzugsweise mehrere SPADs, umfasst.

12. LIDAR-Distanzmessvorrichtung (10) nach einem der vorstehenden Ansprüche,
wobei der erste Pixel (28) und der zweite Pixel (32) als eigenständige Bauteile ausgebildet sind.

13. LIDAR-Distanzmessvorrichtung (10) nach einem der vorstehenden Ansprüche,
wobei der Lichtempfänger (16) eine Vielzahl von SPADs umfasst,
wobei eine Steuereinheit ausgebildet ist, eine erste Anzahl von SPADs anzusteuern, um den ersten Pixel (28) zu bilden, und eine zweite Anzahl von SPADs anzusteuern, um den zweiten Pixel (32) zu bilden.

14. LIDAR-Distanzmessvorrichtung (10) nach einem der vorstehenden Ansprüche,
wobei der erste Pixel (28) zusätzlich zur Erzeugung eines Referenzrauschwerts ausgebildet ist.

15. Verfahren zur Ermittlung einer Distanz, welches umfasst, dass:
ein Sendelichtstrahl (14) in unterschiedliche Abstrahlrichtungen in einen Messbereich entsendet wird;
von einem Lichtempfänger (16) mit einer Vielzahl von Pixeln (28, 32) von Objekten (18) in dem Messbereich zurückgestrahltes Licht als Empfangslichtstrahl (20) empfangen wird, von zumindest einem ersten Pixel (28) der Empfangslichtstrahl (20) aus einer Lichtstrahlerfassungsrichtung empfangen wird und ein Signalwert erzeugt wird und vor oder nach einer Zeitdauer Δt von zumindest einem zweiten Pixel (32) Lichtstrahlen aus derselben Lichtstrahlerfassungsrichtung erfasst werden, um einen Rauschwert zu erzeugen; und
eine Entfernung zu dem Objekt (18) auf Basis einer Lichtlaufzeit ermittelt wird, wobei basierend auf einem Vergleich des Signalwerts mit dem Rauschwert eine Evaluierung des Signalwerts durchgeführt wird.
